# FASCICULE DE BREVET EUROPEEN

(11) **EP 3 377 376 B1**
(45) Date de publication et mention de la délivrance du brevet: **05.05.2021**
(21) Numéro de dépôt: 16798178.6
(22) Date de dépôt: 18.11.2016
(51) Int. Cl.: B60R 25/40, G08G 1/00, E05B 81/82

(54) **UNITÉ ÉLECTRONIQUE, SYSTÈME COMPRENANT UNE TELLE UNITÉ ÉLECTRONIQUE ET PROCÉDÉ DE DÉVERROUIILLAGE**
ELEKTRONISCHE EINHEIT, SYSTEM MIT DIESER EINHEIT UND ENTRIEGELUNGSVERFAHREN
ELECTRONIC UNIT, SYSTEM COMPRISING THE UNIT AND UNLOCKING METHOD

(30) Priorité: 18.11.2015 FR 1561080
(43) Date de publication de la demande: 26.09.2018
(73) Titulaire: Valeo Comfort and Driving Assistance, 94046 Créteil Cedex (FR)
(72) Inventeur: OLLIVON, Vincent, 94046 Créteil Cedex (FR); MARTIN, Gilles, 94046 Créteil Cedex (FR)
(74) Mandataire: Delplanque, Arnaud
(86) Numéro de dépôt international: PCT/EP2016/078184
(87) Numéro de publication internationale: WO 2017/085284

(56) Documents cités:
- EP-A1- 0 694 664
- EP-B1- 1 448 952
- DE-A1-102014 105 874
- FR-A1- 2 737 872
- US-A- 5 547 208
- US-A1- 2002 016 673
- US-A1- 2008 122 592

## Description

### DOMAINE TECHNIQUE AUQUEL SE RAPPORTE L'INVENTION

La présente invention concerne le verrouillage et le déverrouillage d'ouvrants de véhicule.

Elle concerne plus particulièrement une unité électronique, un système comprenant une telle unité électronique, ainsi qu'un procédé de déverrouillage.

L'invention s'applique particulièrement avantageusement dans le cas où le déverrouillage des ouvrants d'un véhicule est commandé électroniquement.

### ARRIERE-PLAN TECHNOLOGIQUE

On utilise fréquemment de nos jours des systèmes de commande électroniques pour le verrouillage et le déverrouillage des portes d'un véhicule.

Ces systèmes permettent notamment de commander à distance le verrouillage ou le déverrouillage des portes du véhicule, éventuellement même de manière automatique (par exemple lorsqu'un identifiant porté par l'utilisateur du véhicule est détecté à proximité de ce dernier).

Cette solution nécessite toutefois une source d'énergie électrique, assurée typiquement par la batterie principale du véhicule, pour alimenter l'unité électronique (ou calculateur) en charge de la gestion de l'accès au véhicule (c'est-à-dire en pratique de la réception d'une instruction de verrouillage ou de déverrouillage, ou de la détection d'un identifiant) et l'actionneur de verrouillage et/ou de déverrouillage.

Ainsi, lorsque la batterie principale du véhicule est défaillante, le système de verrouillage et de déverrouillage n'est plus opérationnel, ce qui est naturellement problématique.

On équipe donc généralement les véhicules d'au moins un système de déverrouillage mécanique (un tel déverrouillage mécanique étant effectué par insertion d'un insert de clef dans un barillet du verrou prévu à cet effet), très rarement utilisé en pratique US2002016673A décrit une unité électronique pour véhicule comprenant une batterie de secours.

### OBJET DE L'INVENTION

Dans ce contexte, la présente invention propose une unité électronique pour véhicule selon la revendication 1, l'unité comprenant un module conçu pour émettre des données dans un canal de communication utilisant un signal électromagnétique, des bornes de connexion à une batterie du véhicule, et une batterie de secours agencée de manière à alimenter ledit module en cas d'absence d'une tension nominale entre les bornes de connexion.

On profite ainsi de la batterie de secours généralement prévue dans une telle unité électronique (par exemple une unité télématique) pour continuer à commander le verrouillage ou le déverrouillage de l'ouvrant du véhicule même lorsque la batterie (principale) du véhicule est défaillante.

Selon d'autres caractéristiques envisageables à titre optionnel (et donc non limitatif) :
- l'unité électronique est conçue pour émettre ladite commande à réception d'une requête de déverrouillage, par exemple via le canal de communication précité ou via une liaison sans fil établie entre un module de communication sans fil du véhicule et un identifiant (tel qu'un terminal utilisateur ou une clé ou badge d'accès au véhicule) ;
- ledit canal de communication comprend une liaison radio avec une station de base d'un réseau de téléphonie mobile ;
- lesdites données représentent un message d'urgence à destination d'un serveur distant.

L'invention propose également un système comprenant une unité électronique telle que mentionnée ci-dessus et un actionneur de déverrouillage conçu pour recevoir ladite commande de déverrouillage.

L'actionneur de déverrouillage est par exemple agencé pour être alimenté par la batterie de secours en cas de défaillance de la batterie du véhicule, par exemple par l'intermédiaire d'un circuit élévateur de tension.

Un tel système peut comprendre en outre la batterie du véhicule.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un exemple de contexte dans lequel peut être mise en oeuvre l'invention ; et
- la figure 2 est un logigramme représentant un exemple de procédé mis en œuvre par une unité télématique visible en figure 1.

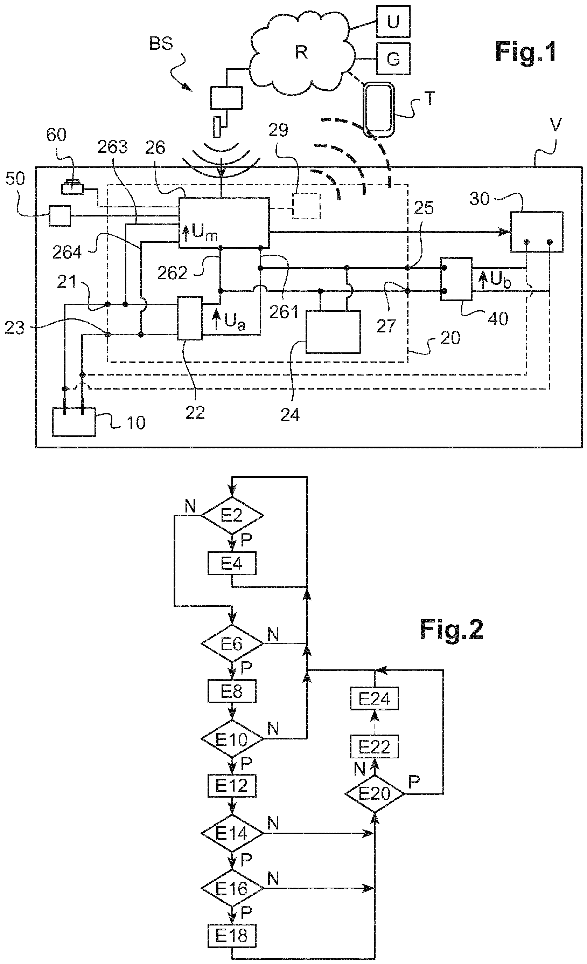

La figure 1 représente schématiquement les éléments principaux d'un exemple de contexte dans lequel peut être mise en œuvre l'invention.

Dans un tel contexte, un véhicule V comprend une batterie principale 10, une unité (ou calculateur) télématique 20, un actionneur de déverrouillage 30, un circuit élévateur de tension 40 et un système de détection d'accident, réalisé ici au moyen d'un accéléromètre 50. D'autres éléments du contexte visibles en figure 1 seront introduits au cours de la description qui suit.

On remarque que le système de détection d'accident peut éventuellement faire partie d'un autre système lié au véhicule, tel que par exemple un système de déclenchement de coussin(s) de sécurité gonflable(s).

Le véhicule V peut comprendre en outre un bouton 60 permettant une commande manuelle d'un appel d'urgence, comme expliqué plus bas.

L'unité télématique 20 est une unité électronique qui comprend un circuit d'alimentation 22, une batterie de secours 24 et un module de commande 26.

Le circuit d'alimentation 22 est connecté, par exemple via des bornes de connexion 21, 23 de l'unité télématique 20, aux deux bornes de la batterie principale 10 et génère en sortie (en cas d'alimentation normale par la batterie principale 10) une tension Uₐ d'alimentation du module de commande 26.

La tension Uₐ générée en sortie du circuit d'alimentation 22 est appliquée à deux bornes d'alimentation 261, 262 du module de commande 26.

Les deux bornes d'alimentation 261, 262 du module de commande 26 sont également reliées respectivement aux deux bornes de la batterie de secours 24.

La batterie de secours 24 est par exemple rechargeable. Dans ce cas, on peut prévoir que la tension Uₐ présente en sortie du circuit d'alimentation 22 provoque la charge de la batterie de secours 24 lorsque cela est nécessaire. Des circuits électroniques dédiés peuvent être prévus dans ce but au niveau de la batterie de secours 24.

En variante, la batterie de secours 24 n'est pas rechargeable. On peut prévoir dans ce cas des circuits électroniques dédiés pour isoler la batterie de secours 24 des bornes d'alimentation 261, 262 tant qu'une tension nominale Uₐ est présente en sortie du circuit d'alimentation 22.

Le module de commande 26 est relié au système de détection d'accident (c'est-à-dire ici à l'accéléromètre 50) de manière à recevoir une information d'accélération instantanée du véhicule V et à provoquer l'émission d'un message d'urgence à destination d'un serveur distant de traitement des urgences U lorsque l'information d'accélération instantanée indique une accélération supérieure à un seuil prédéterminé (ce qui se produit en cas d'accident du véhicule V).

Pour ce faire, le module de commande 26 est notamment conçu pour établir une liaison sans fil (par émission et réception de signaux électromagnétiques au moyen d'une antenne 28) avec une station de base BS d'un réseau de téléphonie mobile et à émettre le message d'urgence à destination du serveur de traitement des urgences U, via la liaison sans fil établie et un réseau de télécommunication R (comprenant le réseau de téléphonie mobile, ainsi qu'éventuellement un réseau public, tel que le réseau Internet).

Le module de commande 26 peut d'ailleurs pour ce faire comprendre en pratique un processeur et un module de communication relié à l'antenne 28.

Le module de commande 26 comprend également deux bornes de mesures 263, 264 reliées respectivement aux bornes de connexion 21, 23 précitées de manière à mesurer la tension Uₘ présente entre ces bornes de connexion 21, 23, c'est-à-dire en entrée du circuit d'alimentation 22.

En fonctionnement normal, la tension mesurée Uₘ est égale à la tension nominale fournie par la batterie principale 10. En cas de perte de l'alimentation au niveau des bornes de connexion 21, 23 (soit parce que la batterie principale 11 est déchargée, soit parce que la batterie principale 11 n'est plus reliée électriquement aux bornes de connexion 21, 23), la tension mesurée Uₘ est inférieure à cette tension nominale, voire nulle.

Lorsque la batterie principale 10 est défaillante, le circuit de commande 26 est alimenté par la batterie de secours 24 et détecte la défaillance de la batterie principale 10 du fait que la tension mesurée Uₘ est inférieure à la tension nominale.

On prévoit alors dans ce cas que le module de commande 26 surveille la réception d'une requête de déverrouillage, en provenance d'un serveur distant de gestion du véhicule G ou d'un terminal utilisateur T, et émette, à réception d'une telle requête de déverrouillage, une commande de déverrouillage à destination de l'actionneur de déverrouillage 30.

La requête de déverrouillage est par exemple reçue au moyen des circuits de télécommunication (antenne 28 et module de communication inclus dans le module de commande 26) utilisés comme indiqué ci-dessus pour l'émission des messages d'urgence.

Dans ce cas, la requête de déverrouillage est transmise du serveur distant de gestion du véhicule G (ou du terminal utilisateur T) via le réseau de télécommunication R précité et une liaison sans fil établie (par échange de signaux électromagnétiques) entre la station de base BS et le module de commande 26. Cette transmission peut utiliser notamment une communication sans fil de type GSM, GPRS, SMS, MMS, UMTS ou LTE.

En variante, en particulier lorsque la requête de déverrouillage est émise par un terminal utilisateur T (tel qu'un ordiphone, une tablette numérique ou une montre connectée) ou un autre identifiant de l'utilisateur (tel qu'une clé ou badge d'accès au véhicule V), la requête de déverrouillage peut être reçue via un module de communication sans fil 29 éventuellement compris dans l'unité télématique 20. Un tel module de communication sans fil 29 est conçu pour établir une liaison sans fil avec le terminal utilisateur T, par exemple une liaison de type Bluetooth ou un réseau local sans fil (ou WLAN pour *"Wireless Local Area Network"*)*.*

Dans tous les cas, on peut prévoir que la requête de déverrouillage comprenne des données d'authentification de l'émetteur de cette requête de sorte que le module de commande 26 puisse vérifier que l'émetteur de la requête est autorisé à commander le déverrouillage des portes du véhicule V.

En outre, le processus d'authentification de l'émetteur de la requête de déverrouillage par le module de commande 26 peut impliquer des échanges bidirectionnels de données entre le module de commande 26 et l'émetteur (ici le serveur distant de gestion du véhicule G ou le terminal utilisateur T), ces échanges étant par exemple effectués par le canal de communication utilisé comme indiqué ci-dessus pour la transmission de la requête de déverrouillage (canal de communication utilisant le réseau de téléphonie mobile ou, en variante, liaison directe entre le module de commande 26 et le terminal T au moyen du module de communication sans fil 29).

Dans le mode de réalisation décrit ici, le module de commande 26 envoie directement une commande de déverrouillage à destination de l'actionneur de déverrouillage 30 à réception d'une requête de déverrouillage, comme indiqué ci-dessus.

On peut toutefois prévoir en variante que le module de commande 26 envoie une commande de déverrouillage à une unité électronique de commande (non représentée) gérant le déverrouillage et le verrouillage des portes du véhicule en fonctionnement normal, c'est-à-dire notamment lorsque cette unité électronique de commande est alimentée électriquement par la batterie principale 10. On prévoit dans ce cas que l'unité électronique de commande soit également alimentée par la batterie de secours 24 en cas de défaillance de la batterie principale 10 de sorte qu'elle puisse recevoir la commande de déverrouillage émise par le module de commande 26 et commander le déverrouillage des portes du véhicule (par exemple par émission d'une commande dédiée à l'actionneur de déverrouillage 30).

L'unité télématique 20 comprend deux bornes de sortie 25, 27 reliées respectivement aux deux bornes de la batterie de secours 24.

Le circuit élévateur de tension 40 est branché sur ces deux bornes de sortie 25, 27 et est conçu pour générer une tension U_{b} adaptée pour alimenter électriquement l'actionneur de déverrouillage 30, en particulier lorsque la batterie principale 10 est défaillante. La tension U_{b} est en effet ici supérieure à la tension délivrée aux bornes de la batterie de secours 24. En pratique, la tension U_{b} adaptée pour alimenter électriquement l'actionneur de déverrouillage 30 est par exemple supérieure à 10 V, tandis que la tension délivrée par la batterie de secours est par exemple comprise entre 3V et 10V.

L'actionneur de déverrouillage 30 peut en outre être alimenté électriquement par la batterie principale 10 lorsque cette batterie principale 10 n'est pas défaillante (comme représenté en pointillés en figure 1). On peut prévoir dans ce cas des circuits électroniques permettant d'isoler l'actionneur de déverrouillage 30 du circuit élévateur de tension 40 lorsque la batterie principale 10 délivre sa tension nominale.

L'actionneur de déverrouillage 30 effectue (lorsqu'il reçoit une commande de déverrouillage en provenance du module de commande 26 ou, dans la variante envisagée plus haut, une commande de déverrouillage en provenance d'une unité électronique de commande) le déverrouillage d'au moins un ouvrant du véhicule V, typiquement la porte du conducteur. L'actionneur de déverrouillage 30 (ou un autre actionneur de déverrouillage recevant également la commande de déverrouillage) peut également effectuer le déverrouillage d'au moins une autre porte du véhicule V, voire de l'ensemble des portes du véhicule V.

La figure 2 est un logigramme représentant un exemple de procédé mis en œuvre par l'unité télématique 20.

Ce procédé débute à l'étape E2 à laquelle le module de commande 26 détermine si le système de détection d'accident détecte un accident, c'est-à-dire ici si l'accéléromètre 50 détecte une accélération instantanée du véhicule V supérieure au seuil prédéterminé, ou si le bouton de commande manuelle d'appel d'urgence 60 a été activé.

Dans la négative (flèche N), le procédé se poursuit à l'étape E6 décrite plus loin.

Dans l'affirmative (flèche P), le procédé se poursuit à l'étape E4 à laquelle le module de commande 26 provoque l'émission d'un message d'urgence à destination du serveur distant de traitement des urgences U. On rappelle que ce message d'urgence est transmis en utilisant un réseau de téléphonie mobile auquel se connecte l'unité télématique 20 par établissement d'une liaison radio avec une station de base BS du réseau de téléphonie mobile.

Le message d'urgence émis peut notamment comprendre la position du véhicule V dans le référentiel terrestre (déterminée par exemple au moyen d'un système de géonavigation équipant le véhicule V).

Après d'autres traitements éventuels non décrits ici, le procédé boucle à l'étape E2 afin de surveiller un nouveau franchissement éventuel du seuil d'accélération précité.

En l'absence de franchissement de ce seuil, le procédé se poursuit comme déjà indiqué à l'étape E6 à laquelle le module de commande 26 détermine si la tension mesurée Uₘ est inférieure à la tension nominale U_{N} de la batterie principale 10 du véhicule V. On peut naturellement prévoir une tolérance dans cette comparaison puisque l'alimentation électrique fournie par la batterie principale permet un fonctionnement normal des circuits électroniques même en cas de légère baisse de tension.

Si l'alimentation électrique fournie par la batterie principale 10 du véhicule est suffisante, le procédé boucle à l'étape E2 déjà décrite.

En revanche, si le module de commande détermine à l'étape E6 que la batterie principale 10 est défaillante, le procédé se poursuit à l'étape E8 à laquelle le module de commande 26 mesure le niveau de charge de la batterie de secours 24. Une telle mesure comprend par exemple en pratique une mesure de la tension aux bornes de la batterie de secours 24 et/ou une mesure du courant fourni par la batterie de secours 24 ou du courant de charge de la batterie de secours 24.

Le module de commande 26 détermine alors à l'étape E10 si le niveau de charge mesuré est supérieur ou égal un niveau de charge prédéfini.

Dans la négative (c'est-à-dire si le niveau de charge mesuré est inférieur au niveau de charge prédéfini), on considère que l'énergie électrique stockée dans la batterie de secours 24 doit être conservée en priorité pour le traitement décrit ci-dessus aux étapes E2 et E4 et le procédé se poursuit dans ce cas à l'étape E2 décrite ci-dessus.

Au contraire, en cas de détermination positive à l'étape E10, le module de commande 26 provoque à l'étape E12 l'émission, à destination du serveur distant de gestion du véhicule G, d'un message contenant le niveau de charge mesuré et/ou le nombre de déverrouillages (et/ou de verrouillages) qui peuvent être effectués (en utilisant la batterie de secours 24 comme source d'énergie électrique) sur instruction du module de commande 26 comme décrit ci-dessous à l'étape E18.

Le procédé se poursuit alors à l'étape E14 à laquelle le module de commande 26 détermine si une requête de déverrouillage a été reçue du serveur distant de gestion du véhicule G ou du terminal utilisateur T.

Dans la négative, le procédé se poursuit à l'étape E20 décrite plus loin.

Dans l'affirmative (flèche P en figure 2), le procédé se poursuit à l'étape E16 à laquelle le module de commande 26 vérifie si les données d'authentification comprises dans la requête de déverrouillage sont correctes. En variante, cette étape peut comprendre des échanges entre le module de commande 26 et l'entité émettrice de la requête (ici le serveur distant de gestion du véhicule G ou le terminal utilisateur T), tels que l'émission d'un défi (ou *"challenge"*) destiné à l'entité émettrice par le module de commande 26 et la transmission en réponse de données obtenues, au sein de l'entité émettrice, en fonction du défi et d'une clé cryptographique (secrète) mémorisée par l'entité émettrice.

Si l'authentification de l'entité émettrice n'est pas réussie (flèche N à l'étape E16), le procédé se poursuit à l'étape E20 décrite plus loin, sans déverrouillage des portes du véhicule V.

Si l'authentification de l'entité émettrice est réussie (flèche P à l'étape E16), le procédé se poursuit à l'étape E18 à laquelle le module de commande 26 envoie une commande de déverrouillage à l'actionneur de déverrouillage 30.

On rappelle que, comme expliqué ci-dessus, l'actionneur de déverrouillage 30 est alors alimenté électriquement par la batterie de secours 24 par l'intermédiaire du circuit élévateur de tension 40 (puisque la batterie principale 10 est défaillante comme déterminé à l'étape E6) et pourra donc mettre en œuvre la commande de déverrouillage reçue du module de commande 26, ce qui provoquera le déverrouillage d'au moins un ouvrant du véhicule V.

Le procédé se poursuit là encore à l'étape E20 décrite à présent.

Le module de commande 26 détermine à l'étape E20 si le véhicule V est en fonctionnement.

Dans l'affirmative (flèche P), le procédé boucle à l'étape E2 pour tester l'accélération instantanée du véhicule V ou l'activation du bouton 60, comme déjà décrit.

Dans la négative (flèche N), le procédé se poursuit à l'étape E22 à laquelle le module de commande 26 commande la mise en veille de l'unité télématique 20 pour une durée déterminée, par exemple comprise entre 1 minute et 10 minutes.

Cette mise en veille permet de réduire la consommation électrique débitée sur la batterie de secours 24 lorsque le véhicule V ne fonctionne pas. La mise en veille entraîne par ailleurs une diminution de la réactivité à réception d'une requête de déverrouillage ; cette moindre réactivité n'est toutefois pas pénalisante dans le cas présent où l'on vise le déverrouillage des portes dans le cas exceptionnel de défaillance de la batterie (le déverrouillage des portes étant commandé en fonctionnement normal par une unité électronique dédiée).

Une fois la durée prédéterminée écoulée, le module de commande 26 se réveille automatiquement (étape E24) et le procédé boucle à l'étape E2 décrite plus haut.

On a décrit ici un exemple où la mise en veille de l'étape E22 n'est réalisée que lorsque le véhicule V est inutilisé (réponse négative au test de l'étape E20). On pourrait prévoir en variante une mise de l'unité télématique 20 en mode basse consommation même lorsque le véhicule V est en fonctionnement, l'unité télématique 20 pouvant toutefois sortir automatiquement de ce mode base consommation à réception d'un signal du système de détection d'accident 50, ou lors de l'activation du bouton 60, ou encore à réception d'une requête de déverrouillage.

Par ailleurs, la description qui précède s'intéresse principalement au déverrouillage d'au moins un ouvrant lorsque la batterie principale d'un véhicule est défaillante. La solution décrite s'applique toutefois également au verrouillage d'un tel ouvrant, par exemple afin de pouvoir re-verrouiller l'ouvrant (ici au moins une porte d'un véhicule) déverrouillé par la méthode décrite ci-dessus tant que la batterie principale (défaillante) n'est pas remplacée.

## Revendications

1. Unité électronique (20) pour véhicule (V) comprenant :
- un module de commande (26) conçu pour émettre des données dans un canal de communication utilisant un signal électromagnétique, ledit module de commande (26) étant relié à un système de détection d'accident (15) de manière à recevoir une information (20) d'accélération instantanée du véhicule (V) et configuré pour provoquer l'émission de donnés correspondant à un message d'urgence à destination d'un serveur distant de traitement des urgences (U) lorsque l'information d'accélération instantanée indique une accélération supérieure à un seuil prédéterminé;
- des bornes de connexion (21, 23) à une batterie (10) du véhicule (V) ; et
- une batterie de secours (24) agencée de manière à alimenter ledit module de commande (26) et un actionneur de déverrouillage (30) du véhicule (V) en cas d'absence d'une tension nominale entre les bornes de connexion (21, 23) ;
le module de commande (26) étant en outre conçu pour envoyer à destination de l'actionneur de déverrouillage (30) une commande de verrouillage ou de déverrouillage d'au moins un ouvrant du véhicule (V), ladite unité électronique (20) comprenant également un module de communication sans fil (29) et en ce que le module de commande (26) est conçu pour émettre ladite commande à réception d'une requête de déverrouillage via une liaison sans fil établie entre ledit module de communication sans fil (29) et un identifiant (T).

2. Unité électronique selon la revendication 1, dans laquelle ledit canal de communication comprend une liaison radio avec une station de base (BS) d'un réseau de téléphonie mobile.

3. Système comprenant une unité électronique selon l'une des revendications 1 à 2 et un actionneur de déverrouillage (30) conçu pour recevoir ladite commande de déverrouillage.

4. Système selon la revendication 3, dans lequel l'actionneur de déverrouillage (30) est agencé pour être alimenté par la batterie de secours (24) en cas de défaillance de la batterie (10) du véhicule (V).

5. Système selon la revendication 4, dans lequel l'actionneur de déverrouillage (30) est agencé pour être alimenté par la batterie de secours (24) par l'intermédiaire d'un circuit élévateur de tension (40).

6. Système selon l'une des revendications 3 à 5, comprenant la batterie (10) du véhicule (V).

## Patentansprüche

1. Elektronische Einheit (20) für ein Fahrzeug (V), welche umfasst:
- ein Steuerungsmodul (26), das dafür eingerichtet ist, Daten über einen Kommunikationskanal unter Verwendung eines elektromagnetischen Signals zu senden, wobei das Steuerungsmodul (26) mit einem Unfallerkennungssystem (15) verbunden ist, um eine Information (20) über die Momentanbeschleunigung des Fahrzeugs (V) zu empfangen, und dafür ausgelegt ist, das Senden von Daten, die einer Notfallnachricht entsprechen, an einen entfernten Server zur Server zur Bearbeitung der Notfälle (U) zu bewirken, wenn die Information über die Momentanbeschleunigung eine Beschleunigung anzeigt, die höher als ein vorbestimmter Schwellenwert ist;
- Klemmen zum Anschluss (21, 23) an eine Batterie (10) des Fahrzeugs (V); und
- eine Hilfsbatterie (24), die so ausgebildet ist, dass sie das Steuerungsmodul (26) und einen Aktuator zur Entriegelung (30) des Fahrzeugs (V) im Fall eines Nichtvorhandenseins einer Nennspannung zwischen den Anschlussklemmen (21, 23) mit Strom versorgt;
wobei das Steuerungsmodul (26) außerdem dafür eingerichtet ist, an den Aktuator zur Entriegelung (30) einen Befehl zur Verriegelung oder Entriegelung wenigstens eines Öffnungselements des Fahrzeugs (V) zu senden, wobei die elektronische Einheit (20) außerdem ein drahtloses Kommunikationsmodul (29) umfasst, und dadurch, dass das Steuerungsmodul (26) dafür eingerichtet ist, diesen Befehl bei Empfang einer Entriegelungsanforderung über eine drahtlose Verbindung, die zwischen dem drahtlosen Kommunikationsmodul (29) und einem Identifikator (T) eingerichtet ist, zu senden.

2. Elektronische Einheit nach Anspruch 1, wobei der Kommunikationskanal eine Funkverbindung mit einer Basisstation (BS) eines Mobiltelefonnetzes umfasst.

3. System, welches eine elektronische Einheit nach einem der Ansprüche 1 bis 2 und einen Aktuator zur Entriegelung (30), der dafür eingerichtet ist, den Befehl zur Entriegelung zu empfangen, umfasst.

4. System nach Anspruch 3, wobei der Aktuator zur Entriegelung (30) dafür ausgebildet ist, im Fall eines Ausfalls der Batterie (10) des Fahrzeugs (V) von der Hilfsbatterie (24) mit Strom versorgt zu werden.

5. System nach Anspruch 4, wobei der Aktuator zur Entriegelung (30) dafür ausgebildet ist, von der Hilfsbatterie (24) über eine Spannungserhöhungsschaltung (40) mit Strom versorgt zu werden.

6. System nach einem der Ansprüche 3 bis 5, welches die Batterie (10) des Fahrzeugs (V) umfasst.

## Claims

1. Electronic unit (20) for a vehicle (V) comprising:
- a control module (26) designed to transmit data through a communication channel using an electromagnetic signal, said control module (26) being connected to an accident detection system (15) so as to receive information (20) on the instantaneous acceleration of the vehicle (V) and configured to cause the transmission of data corresponding to an emergency message to a remote server for processing emergencies (U) when the instantaneous acceleration information indicates an acceleration above a predefined threshold;
- connection terminals (21, 23) for connecting to a battery (10) of the vehicle (V); and
- a backup battery (24) arranged so as to supply power to said control module (26) and an unlocking actuator (30) for unlocking the vehicle (V) in case of absence of a nominal voltage between the connection terminals (21, 23);
the control module (26) furthermore being designed to send the unlocking actuator (30) a command to lock or unlock at least one opening element of the vehicle (V), said electronic unit (20) also comprising a wireless communication module (29) and in that the control module (26) is designed to transmit said command on reception of an unlocking request via a wireless link established between said wireless communication module (29) and an identifier (T) .

2. Electronic unit according to Claim 1, wherein said communication channel comprises a radio link with a base station (BS) of a mobile telephone network.

3. System comprising an electronic unit according to either of Claims 1 and 2 and an unlocking actuator (30) designed to receive said unlocking command.

4. System according to Claim 3, wherein the unlocking actuator (30) is arranged to be supplied with power by the backup battery (24) in case of failure of the battery (10) of the vehicle (V).

5. System according to Claim 4, wherein the unlocking actuator (30) is arranged to be supplied with power by the backup battery (24) via a voltage boost converter circuit (40).

6. System according to one of Claims 3 to 5, comprising the battery (10) of the vehicle (V).
